# EUROPÄISCHE PATENTSCHRIFT

(11) **EP 2 054 152 B1**
(45) Veröffentlichungstag und Bekanntmachung des Hinweises auf die Patenterteilung: **13.04.2016**
(21) Anmeldenummer: 07765176.8
(22) Anmeldetag: 11.07.2007
(51) Int. Cl.: B01J 21/04, B01J 23/80, B01J 23/889, C01B 13/14, C01F 7/00, C01G 3/00, C01G 9/00, C01G 45/00

(54) **VERFAHREN ZUR HERSTELLUNG NANOKRISTALLINER METALLOXIDE**
METHOD FOR THE PRODUCTION OF NANOCRYSTALLINE METAL OXIDE
PROCÉDÉ DE FABRICATION D'OXYDES MÉTALLIQUES NANOCRISTALLINS

(30) Priorität: 13.07.2006 DE 102006032452
(43) Veröffentlichungstag der Anmeldung: 06.05.2009
(60) Teilanmeldung: 11161500.1
(73) Patentinhaber: Süd-Chemie IP GmbH & Co. KG, 80333 München (DE)
(72) Erfinder: WÖLK, Hans-Jörg, 83022 Rosenheim (DE); BURGFELS, Götz, 83043 Bad Aibling (DE); POLIER, Siegfried, verstorben (DE)
(74) Vertreter: Silber, Anton
(86) Internationale Anmeldenummer: PCT/EP2007/006158
(87) Internationale Veröffentlichungsnummer: WO 2008/006565

(56) Entgegenhaltungen:
- EP-A- 1 142 830
- WO-A-02/072471
- WO-A-2006/027270
- DE-A1- 10 109 892
- G.P. VISSOKOV: "Voltammetric and X-ray diffraction analysis of the early stages of the thermal crystallization of mixed Cu,Mn oxides" BULGARIAN CHEMICAL COMMUNICATIONS, Bd. 34, Nr. 3/4, 2002, Seiten 310-320, XP009090479
- JOURNAL OF SOLID STATE ELECTROCHEMISTRY , 8(4), 252-259 CODEN: JSSEFS; ISSN: 1432-8488, 2004, XP002454040

## Beschreibung

Die vorliegende Erfindung betrifft ein Verfahren zur Herstellung von nanokristallinen Metalloxiden sowie nanokristalline Metalloxide, hergestellt nach dem erfindungsgemäßen Verfahren und deren Verwendung als Katalysatoren, insbesondere für die Herstellung von Methanol aus Kohlenmonoxid und Wasserstoff.

Metalloxide, insbesondere gemischte Metalloxide finden ein weites Anwendungsgebiet, wie beispielsweise in Keramiken, Polymeradditiven, Füllstoffen, Pigmenten, reaktiven Oberflächen, Katalysatoren etc.

Insbesondere finden Metalloxide auch Verwendung als Katalysatoren, beispielsweise im Bereich von Abgaskatalysatoren in Automobilen, bei der Herstellung von Fotokatalysatoren, beispielsweise Titandioxid bzw. dotierten Titanoxiden, und für die Herstellung von oxidischen Katalysatoren, insbesondere für die Herstellung von Methanol. Hierbei beeinflusst der Prozess der Kalzinierung der Katalysatorausgangsmaterialien während der Herstellungsverfahren wesentlich die Qualität der Endkatalysatoren.

Die gezielte Steuerung des Kristallisationsprozesses kann durch die Zusammensetzung des/der Edukts(e) beeinflusst werden. Ein wichtiger Faktor ist hierbei insbesondere die Kristallitgröße bei verschiedenen Katalysatorsystemen (R. Schlögl et al., Angewandte Chemie 116, 1628-1637 (2004)).

Immer mehr werden dabei so genannte "nanokristalline" Pulver in Betracht gezogen, trotz der oft ungelösten Herstellungsprobleme.

Nanokristalline Oxidpulver werden üblicherweise bislang entweder durch chemische Synthese, durch mechanische Verfahren oder durch so genannte thermophysikalische Verfahren hergestellt. Bei Perowskiten werden mit den herkömmlichen Verfahren dabei z.B. BET-Oberflächen von 2-10 m²/g erreicht.

Typischerweise werden nanokristalline Pulver bei der chemischen Synthese ausgehend von so genannten precursor-Verbindungen (Vorläuferverbindungen) durch chemische Reaktionen hergestellt, beispielsweise mittels Hydroxidfällung, Synthese durch Hydrolyse metallorganischer Verbindungen und Hydrothermalverfahren. Die endgültige Struktur der Nanokristallite wird dabei typischerweise erst nach der Kalzination erzielt.

Mechanische Herstellungsverfahren sind üblicherweise durch intensives Mahlen inhomogener Partikel zu homogenen Partikeln charaktetrisiert, was oftmals auch zu unerwünschten Phasentransformationen bis hin zu amorphen Partikeln aufgrund des auf die Partikel ausgeübten Druckes führt.

Nachteiligerweise liegen die dabei gebildeten Partikel nicht in einer gleichmäßigen Größenverteilung vor. Außerdem besteht die Gefahr von Abrieb durch die Mahlwerkzeuge und somit einer Kontamination der Produkte, was insbesondere im Bereich der Katalysatortechnologie von Nachteil ist.

Thermophysikalische Methoden, wie sie beispielsweise in der WO 2004/005184 beschrieben sind, beruhen auf der Einbringung thermischer Energie zu festen, flüssigen oder gasförmigen Ausgangsverbindungen. Diese internationale Patentanmeldung betrifft insbesondere das so genannte plasmapyrolytische Sprayverfahren (PSP), bei dem die Ausgangsstoffe in einer Knallgasflamme versprüht und zersetzt werden. Eine typische technische Anwendung findet sich bei der Herstellung von Siliziumdioxid, bei dem leicht flüchtige Siliziumverbindungen in einer Knallgasflamme versprüht werden.

Weiterhin wird bei der Synthese nanokristalliner Partikel des so genannten Plasmasyntheseverfahrens eingesetzt, bei dem die Ausgangsstoffe in einem bis zu 6.000 K heißen Plasma verdampft werden. Weitere übliche Verfahren sind beispielsweise CVD-Verfahren, bei dem gasförmige Edukte zur Reaktion gebracht werden, wobei dabei typischerweise nicht oxidische Pulver entstehen.

Die WO 02/072471 A betrifft ein Verfahren zur Herstellung eines feinteiligen, multinären Metalloxidpulvers, das zur Herstellung von Hochtemperatursupraleitern geeignet ist. Hierfür wird eine Mischung, die aus einem entsprechenden Metallsalz und/oder einem Metalloxid und/oder Metallen besteht, in dem erforderlichen stöchiometrischen Verhältnis in einen Pulsationsreaktor mit einer pulsierenden Strömung eingeführt und teilweise oder vollständig in multinäre Metalloxide umgesetzt.

Die WO 2006/027270 A betrifft ein Verfahren zur Herstellung einer mehrkomponentigen Metalloxidverbindung in Pulverform, dadurch gekennzeichnet, dass Vorläuferverbindungen der Komponenten der gewünschten Metalloxidverbindung in fester Form oder in Form einer Lösung oder einer Suspension in einen Pulsationsreaktor mit einer aus einer flammenlosen Verbrennung resultierenden Gasströmung eingebracht und teilweise oder vollständig zur gewünschten Metalloxidverbindung umgesetzt werden, wobei die Vorläuferverbindungen ein Gemisch wenigstens einer ersten Metallverbindung aus der Gruppe der Alkalimetalle mit wenigstens einer zweiten Metallverbindung, ausgewählt aus der Gruppe bestehend aus den Übergangsmetallen, den übrigen Hauptgruppenmetallen, den Lanthaniden und den Actiniden, im gewünschten Verhältnis enthalten.

G. P. Vissokov beschreibt in "Voltammetric and X-ray diffraction analysis of the early stages of the thermal crystallization of mixed Cu, Mn oxides", Bulgarian Chemical Communications, Ed. 34, Nr. 3/4, 2002, Seiten 310 bis 320, die Hochtemperaturthermodynamik von Cu-Zn-Al-O-Systemen.

Grygar et al. beschreiben in "Voltammetric and X-ray diffraction analysis of the early stages of the thermal crystallization of mixed Cu, Mn oxides", Journal of Solid State Electro-Chemistry (2004), 8, 252-259, Herstellung von gemischten Cu,Mn, Cu,Mn,Al, Cu,Mg,Mn, und Cu,Mg,Mn,Al Oxidendurch Kalzinierung von amorphen basischem Karbonatpräkursoren (Cu,Mn Oxide)oder von Hydrotacit-ähnlichen Präkursoren bei 300-800°C.

EP 1142830 A betrifft nanoskalige pyrogen hergestellte Oxide und/oder Mischoxide von Metallen und/oder Metalloiden, dadurch gekennzeichnet, dass sie eine BET-Oberfläche zwischen 1 und 600 m²/g und einen Gesamtchloridgehalt von weniger als 0,05 Gew.-% aufweisen.

DE 101 09 892 A1 betrifft ein Verfahren zur Herstellung monomodaler nanokristalliner Oxidpulver mittels eines thermophysikalischen Verfahrens, dadurch gekennzeichnet, dass zur Einstellung der Partikelgröße, der spezifischen inneren Oberfläche und einer definierten Kristallstruktur im Endprodukt a) die Ausgangsstoffe in einer ersten Prozessstufe auf Verdampfungstemperatur erwärmt werden, b) die verdampften gasförmigen Ausgangsstoffe mittels Unterdruck einer pulsierenden Verbrennung mit enger Tröpfchengrößenverteilung zugeführt werden, c) die verdampften gasförmigen Ausgangsstoffe mittels pulsierender Verbrennung in einem Heißgasstrom einer thermoschockartigen Zersetzungsreaktion zur Bildung von Feststoffpartikeln unterzogen werden, d) der mit dem Oxidpulver entstandene Heißgasstrom einem Heißgasfilter zur Trennung des Oxidpulvers vom Heißgasstrom zugeführt wird.

Die vorgenannten Verfahren des Standes der Technik weisen jedoch Nachteile auf in Bezug auf das Vorliegen einer zu breiten Partikelgrößenverteilung, unerwünschter Agglomeration der Partikel untereinander oder unvollständiger Phasenumwandlungen.

Aufgabe der vorliegenden Erfindung war es daher, ein Verfahren zur Herstellung möglichst monomodal verteilter nanokristalliner Pulver zur Verfügung zu stellen, welches die vorgenannten Nachteile des Standes der Technik vermeidet, insbesondere die unerwünschten Phasenumwandlungen, eine einstellbare nanokristalline Partikelgröße ermöglicht und Teilchen mit spezifischer innerer Oberfläche und definierter Kristallstruktur zur Verfügung stellt.

Diese Aufgabe wird erfindungsgemäß gelöst durch ein Verfahren zur Herstellung nanokristalliner Metalloxidpartikel umfassend die Schritte
a) des Einbringens einer Ausgangsverbindung in eine Reaktionskammer mittels eines Trägerfluids,
b) des Unterwerfens der Ausgangsverbindung in einer Behandlungszone unter eine pulsierend einwirkende thermische Behandlung einer pulsierenden Strömung (auch pulsierend einwirkende thermische Behandlung" genannt) bei einer Temperatur von 240 bis 600°C mit einer Verweilzeit im Bereich von 200 ms und 2s,
c) des Bildens von nanokristallinen Metalloxidpartikeln,
d) des Ausbringens der in Schritt b) und c) erhaltenen nanokristallinen Metalloxidpartikel aus dem Reaktor,
wobei die Ausgangsverbindung in Form einer Lösung, Aufschlämmung, Sustpension oder in festem Zustand in die Reaktionskammer eingebracht wird, gelöst. überraschenderweise wurde gefunden, dass das Verfahren bei relativ niedrigen Temperaturen von 240° bis 600°C durchgeführt werden kann. Bislang waren aus dem Stand der Technik bevorzugte Temperaturen von mehr als 700°C, und zwar bis zu 1400°C bekannt.

Ganz besonders überraschend wurde gefunden, dass durch das erfindungsgemäße Verfahren der Kristallisationsprozess gezielt gesteuert werden kann, insbesondere die Größe der Kristallite und die Porengrößenverteilung der entsprechenden Metalloxide. Dies kann weiter durch die Verweilzeit in der Flamme bzw. die Reaktortemperatur weiter vorteilhaft beeinflusst werden. Durch die pulsierende thermische Behandlung werden die entstehenden nanokristallinen Partikel daran gehindert, zu agglomerieren. Typischerweise werden die nanokristallinen Partikel sofort durch den Strom an heißem Gas in eine kältere Zone überführt, wo Nanokristallite zum Teil mit Durchmessern von weniger als 20 Nanometern erhalten werden.

Dies führt bei den erfindungsgemäß erhaltenen Nanokristalliten zu deutlich erhöhten BET-Oberflächen. Beispielhaft seien die Gruppe der Perowskite erwähnt, die bei herkömmlichen syntheseverfahren für nanokristalline Perowskite eine BET-Oberfläche von circa 2-10 m²/g aufweisen, wohingegen das erfindungsgemäße Verfahren zu Perowskit-Nanokristalliten mit einer BET-Oberfläche von 100-200 m²/g führt. Weiter wurde die Verwendung von Aluminium-tri-sec-butylat als Ausgangsstoff γ-Al₂O₃ mit einer spezifischen Oberfläche von 40 - 150 m²/g bei einer Partikelgröße von 20-40 nm erhalten. Erfindungsgemäß hergestellter Mullit wies einen BET Wert von 12-14 m²/g auf mit' einem **D₅₀** Wert von 2 µm.

Ganz allgemein bestehen weitere wesentliche Vorteile des erfindungsgemäßen Verfahrens darin, dass beispielsweise Suspensionen ohne zusätzliche Filtrations- und/oder Trocknungsschritte bzw. ohne Zugabe von zusätzlichen Lösungsmitteln innerhalb eines sehr kurzen Zeitraums, typischerweise innerhalb weniger Millisekunden, bei vergleichsweise niedrigen Temperaturen als bei Verfahren des Standes der Technik üblich kalziniert werden können Die entstehenden Nanokristallite weisen signifikant erhöhte BET-Oberflächen auf, was im Falle katalytisch aktiver Materialien zu Katalysatoren mit erhöhter Reaktivität, verbessertem Umsatz und Selektivität führt. Durch die annähernd gleiche Verweilzeit jedes Partikels in dem durch das Verfahren erzeugte homogene Temperaturfeld entsteht ein äußerst homogenes Endprodukt mit enger monomodaler Teilchenverteilung.

Eine Vorrichtung zur Durchführung des erfindungsgemäßen Verfahrens bei Herstellung derartiger monomodaler nanokristallinen Metalloxidpulver ist beispielsweise aus der DE 10109892 A1 bekannt. Im Gegensatz zu der dort beschriebenen Vorrichtung und dem dort offenbarten Verfahren benötigt das vorliegende Verfahren jedoch keinen vorgelagerten Verdampfungsschritt, in der Ausgangsstoffe auf eine Verdampfungstemperatur erwärmt werden.

Typischerweise werden die Materialien, aus denen die erfindungsgemäßen Metalloxidpulver hergestellt werden direkt über ein Trägerfluid, insbesondere ein Trägergas, vorzugsweise ein inertes Trägergas, wie beispielsweise Stickstoff etc., in die so genannten Reaktionskammer, genauer gesagt in die Brennkammer, eingeführt. An die Reaktionskammer ist abgasseitig ein Resonanzrohr mit einem gegenüber der Reaktionskammer deutlich verringernden Strömungsquerschnitt angeschlossen. Der Brennkammerboden ist mit mehreren Ventilen zum Eintritt der Verbrennungsluft in die Brennkammer ausgestattet. Die aerodynamischen Ventile sind dabei strömungstechnisch und akustisch so mit der Brennkammer und der Resonanzrohrgeometrie abgestimmt, dass die in der Brennkammer erzeugten Druckwellen des homogenen "flammenlosen" Temperaturfeldes sich vorwiegend im Resonanzrohr pulsierend ausbreiten. Es bildet sich ein so genannter Helmholtz-Resonator mit pulsierender Strömung aus mit einer Pulsationsfrequenz zwischen 10 und 150 Hz, bevorzugt 30 bis 110 Hz.

Die Materialzuführung in die Reaktionskammer erfolgt typischerweise entweder mit einem Injektor oder mit einer geeigneten Zweistoffdüse oder in einem Schenkdosierer.

Das erfindungsgemäße Verfahren ermöglicht die Herstellung monomodaler, nanokristalliner Oxidpulver durch direkte Einbringung. Überraschenderweise können auch Oxidpulver direkt in die Brennkammer eingebracht werden, ohne dass die entstehenden kristallinen Materialien filtriert werden müssen. Weiterhin ermöglicht das erfindungsgemäße Verfahren, dass niedrigere Temperaturen bei der Herstellung der erfindungsgemäßen Metalloxide als im Stand der Technik verwendet werden können, so dass eine tendenziell mögliche Oberflächenverringerung der entstehenden Produkte durch Einsatz sehr hoher Temperaturen von < 1000°C vermieden wird. Außerdem lässt sich im Falle der Verwendung von Lösungen von Metallsalzen ein zusätzlicher Fällungsschritt vermeiden, so dass diese direkt im Reaktor kalziniert werden können.
Bevorzugt ist das Trägerfluid ein Trägergas, wie beispielsweise Luft, Stickstoff bzw. Luft/Stickstoff-Gemische. Natürlich kann alternativ auch eine Flüssigkeit als Fluid verwendet werden bzw. auch schon in Lösung vorliegende Ausgangsstoffe. Die Art des Trägerfluids hat insbesondere Einfluss auf die Verweilzeit in der Behandlungszone. So können beispielsweise auch direkt Suspensionen und Aufachlämmungen schwerlöslicher Verbindungen wie Sulfate, Oxide, Nitride etc. erfindungsgemäß verwendet werden.

Bevorzugt wird die Ausgangsverbindung in verdüster Form in die Reaktionskammer eingebracht, so dass eine feine Verteilung im Bereich der Behandlungszone gewährleistet ist.

Von Vorteil ist, wenn verschiedene Ausgangsverbindungen eingesetzt werden, die insbesondere verschieden voneinander sind, um auch komplexe Metalloxide bzw. Mischoxide herstellen zu können. Dies ist insbesondere von Vorteil, wenn komplexere Katalysatorsysteme, die auf der Synergie verschiedener Metalloxide beruhen, hergestellt werden sollen.

Durch die Kontrolle der Pulsation (regelmäßig oder unregelmäßig bzw. die Dauer und Amplituden der pulsierenden thermischen Behandlung) sowie der Verweilzeit der Ausgangsverbindung(en) in der Behandlungszone von 200 ms bis 2 s kann auch die Kristallitgröße entscheidend bestimmt werden. Typische Kristallitgrößen betragen zwischen 5 bis 100 nm bei Pulsationafrequenzen von 30 bis 110 Hz.

Nach der thermischen Behandlung werden die entstandenen nanokristallinen Metalloxide wenn möglich mittels des Trägerfluids sofort in eine kältere Zone der Reaktionskammer überführt, so dass sie in der kälteren Zone abgeschieden werden und ausgetragen werden können. Die Ausbeute des erfindungsgemäßen Verfahrens beträgt nahezu 100%, da das entstehende Produkt vollständig aus dem Reaktor ausgetragen werden kann.

Wie vorstehend schon ausgeführt, wurde überraschenderweise gefunden, dass auch schon in fester Form vorliegende Oxide als Ausgangsstoffe verwendet werden können, die erfindungsgemäß durch die anschließende pulsierende Temperaturbehandlung in nanokristalline Teilchen umgewandelt werden. Dies öffnet vorteilhafterweise einen besonders weiten Anwendungsbereich des erfindungsgemäßen Verfahrens, da es nicht nötig ist, spezifische Ausgangsverbindungen, beispielsweise in Bezug auf ihre Löslichkeit, Verdampfung, zu selektionieren, die ggf. eingesetzt werden können. Ebenso ist es möglich, dass in bevorzugten Weiterbildungen des erfindungsgemäßen Verfahrens lösliche Metallverbindungen als Ausgangsverbindung eingesetzt werden. Dabei können insbesondere einfach zugängliche Ausgangsverbindungen wie die Metallnitrate, -chloride, -acetate etc. von Metallen bzw. Übergangsmetallen eingesetzt werden.

Überraschenderweise wurde gefunden, dass die thermische Behandlung bei Temperaturen von 240 bis 600°C durchgeführt werden kann, was gegenüber den bislang bekannten thermischen Zersetzungsverfahren, die üblicherweise bei Temperaturen von mehr als 1.000° durchgeführt werden, von vorteil ist. Es sinkt auch die Gefahr von Zersetzungs- und Nebenreaktionen, die zu Verunreinigungen des Produktes führen können bzw. auch die Energiebilanz bei der Durchführung des erfindungsgemäßen Verfahrens ist günstiger, da der Energieverbrauch geringer ist.

Typischerweise wird das Verfahren bei einem Druck zwischen 15 bis 40 Bar durchgeführt.

Die Aufgabe der vorliegenden Erfindung wird neben dem erfindungsgemäßen Verfahren auch durch ein nanokristallines Metalloxidmaterial, das durch erfindungsgemäße Verfahren erhältlich ist, gelöst. Das erfindungsgemäße Metalloxidmaterial ist dadurch gekennzeichnet, daß es Kupfer-Zink-und Aluminiumoxide oder Kupfer- Mangan- und Aluminiumoxide enthält, deren BET-Oberfläche im Bereich von 60 bis 70 m²/g liegt. Es wurde gefunden, dass das erfindungsgemäße nanokristalline Metalloxidmaterial bevorzugt eine Kristallitgröße im Bereich von 5 Nanometer bis 100 µm, bevorzugt von 10 Nanometern bis 10 µm, ganz besonders bevorzugt 10 bis 100 nm aufweist, was, wie vorstehend schon ausgeführt, durch die Pulsation der thermischen Behandlung bevorzugt eingestellt werden kann.

Das erfindungsgemäße kristalline Metalloxidmaterial aus Kupfer, Zink und Aluminiumoxid bzw. Kupfer-Mangan und Aluminumoxid findet bevorzugt Verwendung als Katalysator bei der Synthese von Methanol aus CO und wasserstoff.

Das erfindungsgemäße Verfahren ist anhand der nachstehenden Ausführungsbeispiele, die nicht als einschränkend verstanden werden sollen, näher erläutert. Die verwendete Vorrichtung entspricht weitgehend der in der DE 10109992 A1 beschriebenen mit dem Unterschied, dass die zur Durchführung des erfindungsgemäßen Verfahrens verwendete Vorrichtung keine Verdampfervorstufe aufwies.

### Beispiele

### Allgemeines

### Variante 1 (erfindungsgemäßes Beispiel)

Direkte Zugabe in die Reaktionskammer von sprühgetrocknetem Pulver

Die Materialzufuhr des ggf. sprühgetrockneten Pulvers aus Metalloxiden erfolgte mittels eines Schenkdosierers. Die Verweilzeit des Pulvers im Reaktor betrug zwischen 510 und 700 ms. Es wurde eine Aufgabemenge von circa 10 Kilogramm je Stunde gewählt. Die Temperaturen lagen zwischen 245°C und 265°C.

### Variante 2 (Referenzbeispiel)

### Zugabe von Suspensionen

Aus zwei Filterkuchen eines gefällten Ausgangsproduktes wurden wässrige Suspensionen (30% Feststoffanteil) hergestellt und die Suspensionen mittels einer Zweistoffdüse in die Brennkammer des Reaktors verdüst. Das Verfahren wurde bei Temperaturen von 460°C bis 680°C durchgeführt.

Die Suspensionen wurden vor Einbringung in den Reaktorraum durch ein Sieb von nicht aufgelösten Reststoffen getrennt.

### Variante 3 (Referenzbeispiel)

### Einsprühen einer Lösung

Eine wässrige Lösung (ca. 40%) von Cu-Zn-Al-Formiat (alternativ Cu-Mn-Al-Formiat) wurde mittels einer Schlickdüse in der Brennkammer verdüst. Dabei wurde ein Temperaturbereich von 350 °c bis 460°C für die Durchführung des verfahrens gewählt. Es wurde weiter gefunden, dass auch geringere Konzentrationen (10 bis 30%) der entsprechenden Lösung verwendet werden könnten. Die BET Oberfläche des Materials betrug zwischen 60 (Cu/Mn/Al Mischoxid) und 70 m²/g (Cu/Zn/Al Mischoxid). Bei herkömmlich "nasschemiech" hergestellten Cu/Zn/Al Mischoxiden betrug die BET Oberfläche zwischen 15 und 35 m²/g. Die Porenvolumenverteilung des Materials ist in Tabelle 1 dargestellt.

Bei sämtlichen Varianten wurde immer ein amorphes nanokristallines monomodales Material erhalten.

### Tabelle 1:

Porengrößenverteilung des erhaltenen Cu/Zn/Al Mischoxid (BET: 70 m²/g)

| Porenradius (nm) | Porenvolumenverteilung in % |
|---|---|
| 7500 - 875 | 0.83 |
| 875 - 40 | 9.42 |
| 40 - 7 | 67.27 |
| 7 - 3,7 | 22.48 |

Wie aus Tabelle 1 ersichtlich ist, weist das entstandene Produkt eine fast monomodale Verteilung der Porenradien auf, wobei die Mehrzahl der Porenradien in einem Bereich von 40 bis 7 nm liegen.

### Beispiel 1 (Referenzbeispiel)

Durch die Verwendung unterschiedlicher Ausgangsstoffe können auch unterschiedliche Pulvereigenschaften, beispielsweise in Bezug auf die BET-Oberfläche und die Partikelgröße, erhalten werden.

Tabelle 2 zeigt Pulvereigenschaften von Aluminiumoxid, das ausgehend von verschiedenen Ausgangsmaterialien erhalten wurde.

### Tabelle 2:

Pulvereigenschaften von Al₂O₃ bei Verwendung unterschiedlicher Ausgangsstoffe

| Ausgangsstoff | Summenformel | Spezifische Oberfläche | XRD Korund D= 2,088 Å | Partikelgröße |
|---|---|---|---|---|
| | | m²/g | cps | nm |
| Al-Alkoxid | Al(C₄H₉O)₃ | 53 | 33 | 0,5-50 |
| Al-Chlorid | AlCl₃ | 81 | 3 | 5-100 |
| Al-Nitrat | Al(NO₃)₃ * 9H₂O | 17 | 56 | 5-75 |
| "Pseudo" Böhmit | AlO(OH) * H₂O | 11 | 286 | 300-500 |
| Gibbsit | Al(OH)₃ | 26 | 419 | 60-100 |
| Al-oxid | Al₂O₃ | 55 | 12 | 30-50 |

Eigenschaften der erhaltenen nanokristallinen Pulver sind in Tabelle 3 für verschiedene Metalloxide dargestellt.

### Tabelle 3:

Eigenschaften verschiedener nanokristalliner Pulver

| Produkt | TiO₂ | Al₂O₃ | ZnO | ZrO₂ | ZrO₂-Y₂O₃ |
|---|---|---|---|---|---|
| Partikelgröße (nm) | 5 ... 50 | 5 ... 75 | 50 ... 100 | 10 ... 50 | 10 ... 50 |
| Morphologie | sphärisch | sphärisch | aphärisch | sphärisch | Hohlkugeln |
| Kristallphase | Rutil 80% Anatas 20% | γ-α-Al₂O₃ | zincit | Mischphasentetragonal/ Monoklin | tetragonal |
| Spezifische Oberfläche (BET) (m²/g) | 25 | 50 ... 150 | 19 | 14 | 10 |

BET-Werte für die Produkte in Tabelle 2, die mit herkömmlichen Verfahren inasschemischer Fällung und Kalzinieren) hergestellt wurden, wurden wie folgt gemessen:
TiO₂ : 15 - 17 m²/g
Al₂O₃ : 30 - 40m²/g
ZnO : 1,0 - 1,5 m²/g
znO₂ : 1 - 1,8 m²/g
ZnO₂/Y₂O₃ : 0,5 - 1,5 m²/g

## Patentansprüche

1. Verfahren zur Herstellung nanokristalliner Metalloxidpartikel umfassend die Schritte
a) des Einbringens einer Ausgangsverbindung in eine Reaktionskammer mittels eines Trägerfluids,
b) des Unterwerfens der Ausgangsverbindung in einer Behandlungszone unter eine thermische Behandlung einer pulsierenden Strömung bei einer Temperatur von 240 bis 600 °C mit einer Verweilzeit im Bereich von 200 ms und 2 s,
c) des Bildens von nanokristallinen Metalloxidpartikeln,
d) des Ausbringens der in Schritt b) und c) erhaltenen nanokristallinen Metallpartikel aus dem Reaktor,
**dadurch gekennzeichnet, dass** die Ausgangsverbindung in Form einer Lösung, Aufschlämmung, Suspension oder in festem Aggregatzustand in die Reaktionskammer eingebracht wird.

2. Verfahren nach Anspruch 1, **dadurch gekennzeichnet, dass** das Trägerfluid ein Gas ist.

3. Verfahren nach Anspruch 1 oder 2, **dadurch gekennzeichnet, dass** die Ausgangsverbindung in verdüster Form in die Reaktionskammer eingebracht wird.

4. Verfahren nach einem der vorhergehenden Ansprüche, **dadurch gekennzeichnet, dass** ein oder mehrere Ausgangsverbindungen eingesetzt werden, die gleich oder verschieden voneinander sind.

5. Verfahren nach Anspruch 4, **dadurch gekennzeichnet, dass** die Pulsation der pulsierenden Strömung regelmäßig oder unregelmäßig erfolgt.

6. Verfahren nach einem der vorhergehenden Ansprüche, **dadurch gekennzeichnet, dass** nach der thermischen Behandlung in der Behandlungszone die entstandenen nanokristallinen Metallpartikel in eine kältere Zone der Reaktionskammer überführt werden.

7. Verfahren nach Anspruch 6, **dadurch gekennzeichnet, dass** als Ausgangsstoff ein Metalloxid verwendet wird.

8. Verfahren nach Anspruch 6, **dadurch gekennzeichnet, dass** als Ausgangsverbindung eine lösliche Metallverbindung verwendet wird.

9. Verfahren nach einem der vorhergehenden Ansprüche, **dadurch gekennzeichnet, dass** das Verfahren bei einem Druck zwischen 15-40 bar durchgeführt wird.

10. Nanokristallines Metalloxidmaterial erhältlich durch ein Verfahren nach einem der vorhergehenden Ansprüche 1-9, **dadurch gekennzeichnet, dass** es Kupfer-, Zink- und Aluminiumoxide oder Kupfer-, Mangan- und Aluminiumoxide enthält, deren BET-Oberfläche im Bereich von 60 bis 70 m²/g liegt.

## Claims

1. Process for preparing nanocrystalline metal oxide particles, which comprises the steps of
a) introduction of a starting compound into a reaction chamber by means of a carrier fluid,
b) treatment of the starting compound by means of a thermal treatment of a pulsating flow in a treatment zone at a temperature of from 240 to 600°C for a residence time in the range from 200 ms to 2 s,
c) formation of nanocrystalline metal oxide particles,
d) discharge of the nanocrystalline metal particles obtained in step b) and c) from the reactor,
**characterized in that** the starting compound is introduced in the form of a solution, slurry, suspension or in the solid state into the reaction chamber.

2. Process according to Claim 1, **characterized in that** the carrier fluid is a gas.

3. Process according to Claim 1 or 2, **characterized in that** the starting compound is introduced in atomized form into the reaction chamber.

4. Process according to any of the preceding claims, **characterized in that** one or more starting compounds are used which are identical or different from one another.

5. Process according to Claim 4, **characterized in that** the pulsation of the pulsating flow is regular or irregular.

6. Process according to any of the preceding claims, **characterized in that**, after the thermal treatment in the treatment zone, the nanocrystalline metal particles formed are transferred into a colder zone of the reaction chamber.

7. Process according to Claim 6, **characterized in that** a metal oxide is used as the starting material.

8. Process according to Claim 6, **characterized in that** a soluble metal compound is used as the starting compound.

9. Process according to any of the preceding claims, **characterized in that** the process is carried out at a pressure in the range from 15 - 40 bar.

10. Nanocrystalline metal oxide material obtainable using a process according to any of the preceding Claims 1-9, **characterized in that** it comprises copper oxides, zinc oxides and aluminium oxides or copper oxides, manganese oxides and aluminium oxides, the BET surface area of which is in the range from 60 to 70 m²/g.

## Revendications

1. Procédé pour la production de particules nanocristallines d'oxydes métalliques, comprenant les étapes consistant à
a) introduire un composé de départ dans une chambre de réaction au moyen d'un fluide vecteur,
b) soumettre le composé de départ, dans une zone de traitement à un traitement thermique d'un écoulement pulsé à une température de 240 à 600°C avec un temps de séjour dans une plage de 200 ms et 2 s,
c) former des particules nanocristallines d'oxydes métalliques,
d) évacuer, du réacteur, les particules nanocristallines métalliques obtenues dans l'étape b) et l'étape c),
**caractérisé en ce que** le composé de départ est introduit dans la chambre de réaction sous forme d'une solution, d'une pâte, d'une suspension ou dans un état physique solide.

2. Procédé selon la revendication 1, **caractérisé en ce que** le fluide vecteur est un gaz.

3. Procédé selon la revendication 1 ou 2, **caractérisé en ce que** le composé de départ est introduit sous forme atomisée dans la chambre de réaction.

4. Procédé selon l'une quelconque des revendications précédentes, **caractérisé en ce que** l'on utilise un ou plusieurs composés de départ qui sont identiques ou différents les uns des autres.

5. Procédé selon la revendication 4, **caractérisé en ce que** la pulsation de l'écoulement pulsé a lieu de manière régulière ou irrégulière.

6. Procédé selon l'une quelconque des revendications précédentes, **caractérisé en ce qu'**après le traitement thermique dans la zone de traitement, les particules nanocristallines métalliques qui ont été formées sont transférées dans une zone plus froide de la chambre de réaction.

7. Procédé selon la revendication 6, **caractérisé en ce que** l'on utilise comme substance de départ un oxyde métallique.

8. Procédé selon la revendication 6, **caractérisé en ce que** l'on utilise comme substance de départ un composé métallique soluble.

9. Procédé selon l'une quelconque des revendications précédentes, **caractérisé en ce que** le procédé est réalisé à une pression comprise entre 15 et 40 bars.

10. Matériau nanocristallin d'oxydes métalliques, pouvant être obtenu par un procédé selon l'une quelconque des revendications 1 à 9 précédentes, **caractérisé en ce qu'**il contient des oxydes de cuivre, de zinc et d'aluminium ou des oxydes de cuivre, de manganèse et d'aluminium, dont la surface BET se situe dans la plage allant de 60 à 70 m²/g.
